# DEMANDE DE BREVET EUROPEEN

(11) **EP 0 959 633 A1**
(43) Date de publication de la demande: **24.11.1999**
(21) Numéro de dépôt: 98460016.3
(22) Date de dépôt: 20.05.1998
(51) Int. Cl.: H04Q 7/20, H04Q 7/32

(54) **Adaptateur numérique pour terminaux d'abonné radio**

(71) Demandeur: TRT Lucent Technologies (SA), 92359 Le Plessis Robinson (FR)
(72) Inventeur: Carmine, Armand, F-93370 Montfermeil (FR); Daulasim Khamphuc, F-91300 Massy (FR); Lelong, Patrick, F-94130 Nogent-sur-Marne (FR)
(74) Mandataire: Ballot, Paul

(57) **Abrégé**

La présente invention concerne un adaptateur numérique (1) destiné à mettre en relation par voie hertzienne une pluralité de terminaux d'abonnés (8,9) avec une station de base (16) du réseau téléphonique. Cet adaptateur est du type comportant une interface abonné (2,3) en relation avec les terminaux d'abonnés (8,9), une interface DECT (6) pour transformer les signaux issus de l'interface abonné en signaux DECT et inversement, des moyens d'émission et de réception (7) desdits signaux DECT et une antenne (14). Son interface abonné est constitué d'une pluralité de modules d'interface (2,3) indépendants reliés à l'interface DECT (6) au moyen d'un bus numérique de communication (4). Chaque module d'interface est prévu pour le raccordement d'un terminal d'abonné (8,9) à l'interface DECT (6).

Application dans le domaine des réseaux, publics ou privés, à forte capacité d'usagers.

## Description

La présente invention concerne un adaptateur numérique. Un tel adaptateur, appelé couramment CTA (Cordless Terminal Adapter) en langage technique, désigne un matériel d'interface prévu pour communiquer, d'une part, par liaison hertzienne avec une station de base en relation avec le réseau téléphonique classique et d'autre part, avec des terminaux d'abonnés (téléphones analogiques ou numériques, télécopieurs, modems, interface NUMERIS, combinés DECT..) soit par radio, soit par une liaison filaire. L'invention trouve tout particulièrement son application dans le domaine des réseaux sans fil, publics ou privés, à faible ou forte densité d'usagers.

D'une façon générale, ces adaptateurs communiquent avec la station de base du réseau téléphonique par des signaux numériques conformes à la norme DECT (Digital European Cordless Telephony). La bande de fréquences utilisée dans les systèmes fonctionnant selon la norme DECT, est comprise entre 1880 et 1900 MHz et, pour les bandes étendues entre 1900 et 1920 MHz ou entre 1910 et 1930 MHz; cette bande est découpée en dix fréquences porteuses avec une structure de trames pour chacune d'elles selon la technique d'Accès Multiple par Répartition en Fréquence (AMRF). Chaque porteuse est divisée en 24 intervalles de temps dont 12 servent à la transmission de l'adaptateur vers la station de base et les 12 autres servent à la transmission de la station de base vers l'adaptateur. Cette méthode porte la capacité du système à 120 canaux, chaque adaptateur pouvant émettre sur chacun des canaux et simultanément sur douze d'entre eux.

Ce type d'adaptateur comporte généralement :
- une interface abonné en relation avec les terminaux d'abonnés; cette interface abonné peut être une interface téléphonique classique pour le raccordement de téléphones, de télécopieurs ou de modems, une interface numérique, une interface pour le raccordement de modems à haut débit, une interface pour le transfert de paquets de données en mode asynchrone, une interface RNIS pour la connexion de terminaux RNIS, ou bien souvent une combinaison de celles-ci.
- une interface DECT chargée d'effectuer à la fois l'adaptation entre le protocole DECT et les commandes de signalisation de l'interface abonné et le transcodage MIC différentiel adaptatif (MIC-DA); et
- des moyens d'émission et de réception de signaux DECT ainsi qu'une antenne pour établir la liaison hertzienne avec la station de base du réseau téléphonique.

Tous ces moyens sont généralement regroupés dans un boîtier unique, l'antenne pouvant au besoin être séparée du boîtier et déportée dans un endroit plus adapté pour son pointage sur la station de base. Ce boîtier contient donc un bloc électronique qui est personnalisé en fonction des besoins de l'abonné, c'est l'interface abonné, et un bloc électronique commun à tous les adaptateurs, ce sont les moyens d'émission/réception et l'interface DECT.

Cette réunion de circuits électroniques, les uns personnalisés et les autres non, dans un boîtier unique présente un inconvénient majeur. Lorsque l'abonné décide de modifier son installation téléphonique, par exemple rajouter un terminal RNIS ou rajouter une ligne téléphonique supplémentaire, il est contraint de faire modifier ou de changer son adaptateur, ce qui représente un certain coût.

La présente invention vise à pallier cet inconvénient de l'état antérieur de la technique en proposant un adaptateur numérique qui soit plus évolutif.

Aussi, selon l'invention, l'adaptateur se présente sous forme modulaire: il comporte un module commun à tous les adaptateurs et une pluralité de modules d'interface permettant chacun le raccordement d'un terminal au réseau téléphonique. En cas d'ajout d'un terminal, il suffit de rajouter le module d'interface correspondant et de le connecter au module commun de l'adaptateur.

L'invention a donc pour objet un adaptateur numérique destiné à mettre en relation par voie hertzienne une pluralité de terminaux d'abonnés avec une station de base du réseau téléphonique, les signaux échangés entre ladite station de base et ledit adaptateur numérique étant des signaux numériques DECT, lequel adaptateur est du type comportant une interface abonné en relation avec les terminaux d'abonnés, une interface DECT pour transformer les signaux issus de l'interface abonné en signaux DECT et inversement, des moyens d'émission et de réception desdits signaux DECT et une antenne, caractérisé en ce que l'interface abonné consiste en une pluralité de modules d'interface indépendants reliés à l'interface DECT au moyen d'un bus numérique de communication, chaque module d'interface étant prévu pour le raccordement d'un terminal d'abonné à l'interface DECT.

Chaque module d'interface comporte un circuit d'interface conçu pour le raccordement d'un terminal d'abonné, par exemple un circuit d'interface RNIS pour la connexion d'un terminal RNIS ou un circuit d'interface téléphonique pour la connexion d'un poste téléphonique analogique.

Avantageusement, chaque module d'interface comporte en outre son propre dispositif d'alimentation, chaque dispositif d'alimentation contribuant à l'alimentation de l'interface DECT et des moyens d'émission et de réception de l'adaptateur.

Selon un mode de réalisation préféré, l'interface DECT et les moyens d'émission et de réception sont regroupés dans un module de traitement, l'antenne de l'adaptateur est détachable et peut être ou non déportée de ce module.

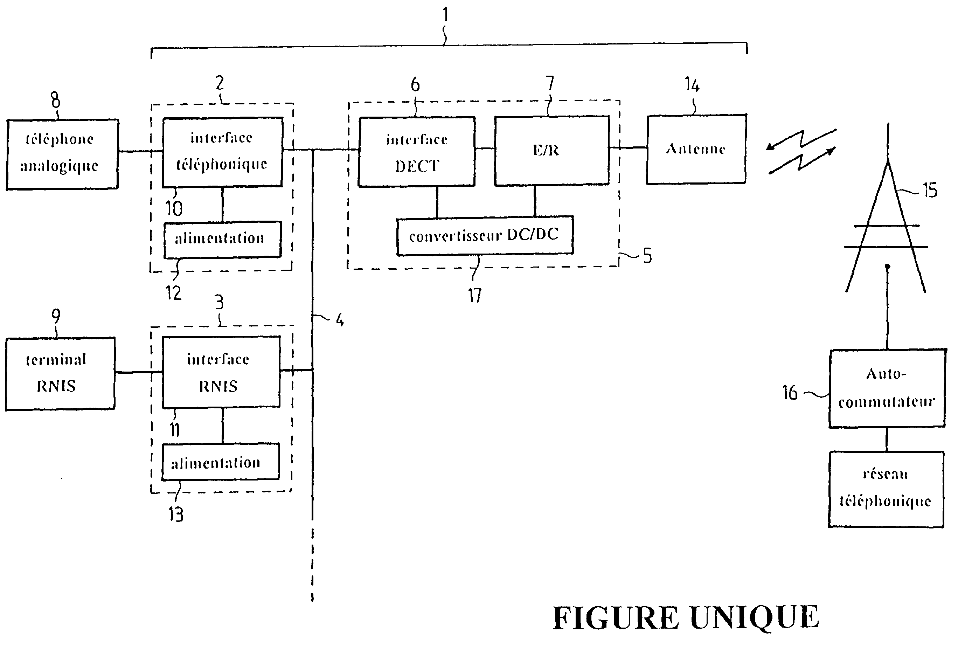

D'autres caractéristiques et avantages de l'invention apparaîtront à la lecture de la description détaillée qui suit et qui est faite en référence à la figure unique annexée qui représente un adaptateur numérique conformément à la présente invention.

Selon l'invention, l'interface abonné de l'adaptateur numérique est constitué par une pluralité de modules d'interface chacun destiné au raccordement d'un terminal au réseau téléphonique. L'adaptateur comporte donc autant de modules d'interface qu'il y a de terminaux à raccorder au réseau téléphonique.

Sur la figure unique, l'adaptateur numérique 1 comporte deux modules d'interface 2 et 3 reliés par un bus de communication 4 à un module de traitement 5 comportant une interface DECT 6 et des moyens 7 d'émission et de réception de signaux DECT. En langage technique, les modules d'interface sont quelquefois désignés par l'abréviation ATS (pour "Active Terminal Socket") et le module de traitement est désigné par l'abréviation CTU (pour "Cordless Terminal Unit").

Dans l'exemple de la figure unique, les modules d'interface 2 et 3 sont prévus respectivement pour le raccordement d'un téléphone analogique classique 8 et d'un terminal RNIS 9. A cet effet, les modules d'interface 2 et 3 comporte respectivement une interface téléphonique classique 10 et une interface RNIS 11.

Si l'abonné désire rajouter une ligne téléphonique supplémentaire pour le raccordement d'un téléphone, d'un télécopieur ou d'un modem, il suffit de prévoir un module d'interface supplémentaire identique au module 2 et de le connecter au module de traitement de l'adaptateur. Ainsi, l'interface abonné ne nécessite pas une personnalisation en usine contrairement aux adaptateurs connus. De même, pour le raccordement d'un téléphone numérique, il suffirait de prévoir un module d'interface comportant une interface numérique. Cette suppression de la personnalisation de l'interface abonné présente des avantages pour le fabricant (au niveau de la production) et pour l'abonné qui ne paie que les modules d'interface supplémentaires lors de la modification de son installation téléphonique.

Le bus de communication 4 est par exemple un bus numérique à temps partagé capable de transférer simultanément jusqu'à six communications téléphoniques codées à 64 Kbit/s. L'adaptateur peut alors comprendre jusqu'à 6 modules d'interface. Les multiples modules d'interface et le bus de communication sont gérés par le module de traitement 5. Bien entendu, pour un facteur de codage différent, 32 Kbit/s par exemple, le bus de communication pourra transférer simultanément un nombre plus important de communications téléphoniques. L'adaptateur comprendra alors au maximum un nombre de modules d'interface correspondant au nombre maximal de communications simultanées possibles.

Avantageusement, chaque module d'interface possède son propre circuit d'alimentation. De cette manière, les modules d'interface sont complètement indépendants. Dans l'exemple de la figure unique, des circuits d'alimentation 12 et 13 sont prévus pour alimenter respectivement l'interface téléphonique 10 et l'interface RNIS 11. Ces circuits d'alimentation vont également contribuer à alimenter le module de traitement 5 de l'adaptateur par l'intermédiaire du bus de communication 4. L'alimentation du module commun 5 est donc supportée par l'ensemble des modules d'interface de l'adaptateur. Chacun des n modules d'interface fournit 1/n du courant nécessaire pour l'alimentation du module 5. Les circuits d'alimentation des modules d'interface sont par exemple du type à découpage. Un dispositif à diode antiretour, interne à chaque module d'interface, assure la protection de ceux-ci et permet d'obtenir une alimentation stable en tension. La régulation du courant en sortie s'effectue automatiquement en fonction du nombre de modules connectés.

Par ailleurs, le module de traitement 5 est relié à une antenne directrice 14 en relation par voie hertzienne avec une station de base 15 du réseau téléphonique, elle-même reliée au réseau téléphonique classique par un autocommutateur 16. Cette antenne peut être ou non déportée du module de traitement 5.

Le module de traitement 5 est chargé de transformer les signaux issus des modules d'interface en signaux DECT et les signaux DECT en provenance de l'antenne 14 en signaux exploitables par les modules d'interface. L'interface DECT 6 et les moyens d'émission et de réception 7 sont alimentés par un convertisseur DC/DC 17, lui-même alimenté par les circuits d'alimentation des différents modules d'interface.

Dans une version améliorée, le module de traitement 5 peut servir également de répéteur téléphonique pour des combinés téléphoniques DECT. Le module de traitement 5 comporte alors deux antennes omnidirectionnelles pour communiquer avec les combinés et les équipements d'une borne radio DECT classique.

Selon un mode de réalisation perfectionné, chaque module d'interface est muni d'une clé électronique de manière à rattacher un module d'interface à un module de traitement particulier et ainsi empêcher la réutilisation du module d'interface avec un autre module de traitement par exemple dans le cas d'un vol.

La présente invention a été décrite avec des circuits d'interface connus (interface téléphonique classique, interface RNIS...). Néanmoins, il est bien évident l'utilisation d'autres types d'interface (par exemple interface spécifique pour le transfert de données) ne sortirait pas du cadre de l'invention.

## Revendications

1. Adaptateur numérique (1) destiné à mettre en relation par voie hertzienne une pluralité de terminaux d'abonnés (8,9) avec une station de base (16) du réseau téléphonique, les signaux échangés entre ladite station de base (16) et ledit adaptateur numérique (1) étant des signaux numériques DECT, lequel adaptateur est du type comportant une interface abonné (2,3) en relation avec les terminaux d'abonnés (8,9), une interface DECT (6) pour transformer les signaux issus de l'interface abonné en signaux DECT et inversement, des moyens d'émission et de réception (7) desdits signaux DECT et une antenne (14),
caractérisé en ce que l'interface abonné consiste en une pluralité de modules d'interface (2,3) indépendants reliés à l'interface DECT (6) au moyen d'un bus numérique de communication (4), chaque module d'interface étant prévu pour le raccordement d'un terminal d'abonné (8,9) à l'interface DECT (6).

2. Adaptateur numérique selon la revendication 1 caractérisé en ce que chaque module d'interface (2,3) comporte son propre dispositif d'alimentation (12,13), chaque dispositif d'alimentation contribuant à l'alimentation de l'interface DECT (6) et aux moyens d'émission et de réception (7) de l'adaptateur.

3. Adaptateur numérique selon la revendication 1 ou 2 caractérisé en ce que l'interface DECT (6) et les moyens d'émission et de réception (7) sont regroupés dans un module de traitement (5), l'antenne pouvant ou non être séparée de ce module.

4. Adaptateur numérique selon l'une des revendications 1 à 3 caractérisé en ce que chaque module d'interface (2,3) comporte une clé électronique.
